# EUROPÄISCHE PATENTSCHRIFT

(11) **EP 0 583 676 B1**
(45) Veröffentlichungstag und Bekanntmachung des Hinweises auf die Patenterteilung: **17.04.1996**
(21) Anmeldenummer: 93112404.4
(22) Anmeldetag: 03.08.1993
(51) Int. Cl.: B05D 1/20

(54) **Verfahren und Vorrichtung zur Herstellung von ultradünnen Schichten und von Schichtelementen**
Process and apparatus for making ultra-thin layers and elements with such layers
Procédé et appareil pour fabriquer des couches ultra-minces et éléments comprenant des couches ultra-minces

(30) Priorität: 19.08.1992 DE 4227380
(43) Veröffentlichungstag der Anmeldung: 23.02.1994
(73) Patentinhaber: HOECHST AKTIENGESELLSCHAFT, D-65929 Frankfurt am Main (DE)
(72) Erfinder: Appel, Gunther, D-65795 Hattersheim (DE); Bauer, Jacqueline, D-65824 Schwalbach (DE); Hickel, Werner, Dr., D-67061 Ludwigshafen (DE); Lupo, Donald, Dr., D-65817 Eppstein/Ts. (DE); Prass, Werner, Dr., D-55128 Mainz (DE); Scheunemann, Ude, Dr., D-65835 Liederbach (DE)

(56) Entgegenhaltungen:
- WO-A-90/01998

## Beschreibung

Die Erfindung bezieht sich auf ein Verfahren und eine Vorrichtung zur Herstellung einer ultradünnen Schicht einer amphiphilen Verbindung auf der Oberfläche einer polaren Flüssigkeit, insbesondere einer Wasseroberfläche, sowie ein Verfahren und Vorrichtungen zum Übertragen solcher ultradünnen Schichten auf einen Träger unter Bildung eines Schichtelements. Bei den Verfahren zum Herstellen der ultradünnen Schichten auf Flüssigkeitsoberflächen werden an einer Flüssigkeits-Gas-Grenzfläche, insbesondere einer Wasser-Luft-Grenzfläche, Grenzschichten durch Spreiten oder durch Adsorption aus der Flüssigkeit erzeugt und durch Strömung der Flüssigkeit durch einen oder mehrere Strömungskanäle komprimiert. Diese lassen sich nach der Langmuir-Blodgett-Technik auf feste Träger übertragen. Die ultradünnen Schichten sind dünner als 30 nm. Soweit die amphiphilen Verbindungen keine Polymeren darstellen, sind sie monomolekular.

Eine Methode zur Herstellung und Übertragung von monomolekularen Schichten (Langmuir-Blodgett-Technik) wird von Langmuir beschrieben (J.Am.Chem.Soc. 57 (1935) 1007-1010). Bei der konventionellen Methode zur Herstellung dieser Schichten werden amphiphile Moleküle, die nicht wasserlöslich sind, in Form einer Lösung auf einer Wasseroberfläche eines sogenannten Langmuir-Troges gespreitet. Nach Verdampfen des Lösungsmittels werden die Moleküle durch Verringerung der ihnen zur Verfügung stehenden Wasseroberfläche zu einem dichten Film komprimiert, bis ein zur Übertragung des Films geeigneter Kompressionszustand erreicht ist. Die Verringerung der Oberfläche erfolgt durch Bewegung einer festen Barriere oder auch durch Verschieben eines geschlossenen flexiblen Bandes, das die amphiphilen Moleküle an der Wasseroberfläche einschließt. Die Übertragung des Films von der Wasseroberfläche auf einen Träger geschieht durch Ein- oder Austauchen des Trägers durch die filmbedeckte Wasseroberfläche. Insbesondere ist die Übertragung von Mehrfachschichten durch Wiederholung der Tauchvorgänge möglich. Solche Mehrfachschichten sind für verschiedene Anwendungen z.B. im Bereich der Sensorik, Optik und Elektronik hochaktuell.

Bei der Beschichtung von relativ großen Substraten mit Mehrfachschichten ist die konventionelle Methode zur Herstellung der Schichten allerdings sehr aufwendig. Dadurch, daß der zur Verfügung stehende Film auf der Wasseroberfläche nach wenigen Tauchzyklen aufgebraucht ist, muß die Filmherstellung durch die oben beschriebenen Vorgänge der Filmspreitung, Lösungsmittelverdampfung und Kompression des Films wiederholt werden, damit die Beschichtung des Substrats fortgesetzt werden kann.

In der Literatur sind mehrere Verfahren beschrieben, die zur Beseitigung dieses Problems auf eine kontinuierliche Herstellung des Films auf der Wasseroberfläche hinzielen. Barraud et al. (Thin Solid Films 99 (1983) 221) beschreiben eine kontinuierliche Technik, bei der der Film mittels rotierender Walzen komprimiert wird. Der Nachteil dieses Verfahrens ist, daß durch Scherbewegungen an den Walzen, besonders in der Nähe deren Ränder, die Struktur des komprimierten Films beeinträchtigt wird.

In US-Patent Nr. 4 722 856 wird ein Verfahren beschrieben, bei dem die gespreiteten Moleküle dadurch komprimiert werden, daß das Wasser aus einem höhergelegenen Bereich des Troges über eine Schräge in einen tiefergelegenen Bereich fließt. Beim Herabfließen des Wassers schwimmen die amphiphilen Moleküle auf der Wasseroberfläche mit und werden im tiefergelegenen Trogbereich gestaut, so daß sich ein komprimierter Film ergibt. An den Kanten der Schräge kann durch Scherbewegungen im Film die Filmqualität beeinträchtigt werden. Aus diesem Grund ist in einer Ausführung des Troges der tiefergelegene Bereich kreisförmig ausgestaltet, damit die Schräge den ganzen tieferen Bereich umgibt, so daß keine Kanten vorhanden sind.

Ein weiteres Verfahren zur kontinuierlichen Herstellung komprimierter Filme auf einer Wasseroberfläche wird in der europäischen Anmeldung 0 433 325 beschrieben. Hierbei wird der Film durch Strömung des Wassers in einem Strömungskanal an einem horizontal angeordneten Wehr komprimiert. Der Strömungskanal kann am Boden eine Rampe zur Verringerung des Querschnitts und Erhöhung der Strömungsgeschwindigkeit aufweisen. Die zur Kompression des Films erforderliche Kraft wird als Reibungskraft des Wassers auf den Film ausgeübt, wobei der Film die Flüssigkeit im Strömungskanal bedeckt. Die Stärke der Filmkompression ist gegeben durch die Form und Länge des Kanals, durch die pro Zeiteinheit hindurchströmende Wassermenge und durch die Wasserstandshöhe in der Kompressionszone des Kanals, welche wiederum durch die Strömungsmenge beeinflußt wird. Die gegenseitige Beeinflussung macht das Einstellen des Kompressionszustandes und die Regelung desselben schwierig.

Verschiedene amphiphile Materialien zeigen als Film auf der Wasseroberfläche ein ausgeprägtes Alterungsverhalten, wie es z.B. bei 22-Tricosensäure der Fall ist. Dies kann dazu führen, daß ein optimales Übertragen des Films auf Substrate nur in bestimmten Alterungszuständen möglich ist. Die Einstellung einer bestimmten Verweilzeit eines einmal erzeugten Films vom Aufspreiten bzw. Komprimieren ist bei konventionellen diskontinuierlichen Verfahren nur bis zum Zeitpunkt der Übertragung der ersten Schicht möglich, da vom Übertragen der ersten Schicht an der komprimierte Film um die für die Übertragung der Schichten benötigte Zeit zusätzlich altert. Hingegen ist bei kontinuierlich arbeitenden Verfahren nach einer Einlaufphase die Filmverweilzeit von der Kompression bis zur Übertragung konstant, so daß ein gleichmäßig gealterter Film übertragen werden kann. Jedoch ist bei den bekannten Verfahren die Verweilzeit konstruktionsbedingt weitgehend festgelegt und kaum einstellbar. Eine Möglichkeit zur Einstellung bietet sich, wenn zusätzlich zum Übertragungsprozeß auf andere Weise, z.B. durch Absaugen, Filmmaterial von der Wasseroberfläche entnommen wird. Das ist jedoch nachteilig, weil es erhöhten Substanzverbrauch und zusätzlichen Regelaufwand zur Folge hat.

Für bestimmte Anwendungen von Langmuir-Blodgett-Schichten, z.B. in der nichtlinearen Optik oder für pyroelektrisch aktive Schichten werden Hetero-Mehrfachschichtsysteme oder alternierende Schichtsysteme benötigt. Das sind solche Mehrfachschichten, bei denen bei aufeinanderfolgenden Tauchprozessen unterschiedliche Schichtmaterialien übertragen werden; z.B. wird beim Eintauchen des Substrats ein Film der Sorte A und beim Austauchen ein Film der Sorte B übertragen, und durch Wiederholung dieser Abfolge werden alternierende Multischichtsysteme aufgebaut. Verfahren mit denen solche Schichten hergestellt werden können, sind z.B. in EP 0 183 426 A2 und in GB 2 165 471 A beschrieben.

Diese Verfahren zum Herstellen alternierender Schichtsysteme arbeiten nach dem konventionellen Prinzip mit Filmkompression durch Barrieren. Hierbei werden zwei Vorrichtungen zum Komprimieren von zwei Filmen in einem Langmuir-Trog so kombiniert, daß eine gemeinsame Wasser-Phase vorliegt und das zu beschichtende Substrat durch den einen Film in das Wasser eingetaucht wird, mit einer geeigneten mechanischen Transportvorrichtung unterhalb der Wasseroberfläche unter den anderen Film transportiert wird und dort durch den anderen Film wieder ausgetaucht wird. Oberhalb der Wasseroberfläche wird das Substrat zum Ausgangspunkt befördert, und der Beschichtungszyklus kann von neuem beginnen. In GB 2 165 471 wird auch bereits beschrieben, daß zwei Kammern mit Subphase, an deren Oberfläche monomolekulare Schichten einer ersten und einer zweiten amphiphilen Verbindung erzeugt wurden, durch eine Wand getrennt sind, die die Subphasen zumindest an der Flüssigkeitsoberfläche trennt und eine Schleuse für ein Substrat aufweist.

Die bekannten Verfahren zur Herstellung alternierender Mehrfachschichtsysteme haben ebenso wie oben beschrieben den Nachteil, daß mit zunehmender Größe der zu beschichtenden Substratoberflächen wegen der Begrenzung der zur Verfügung stehenden Filmflächen auf dem Wasser die Herstellung immer aufwendiger wird. Andererseits sind die bekannten kontinuierlichen Verfahren zur Schichtherstellung nicht für alternierende Multischichten geeignet, insbesondere nicht zur Herstellung von Schichten guter Qualität.

Es bestand die Aufgabe, ein Verfahren zu finden, bei dem Oberflächenfilme aus Amphiphilen für eine nachfolgende Übertragung auf Substrate kontinuierlich auf der Wasseroberfläche komprimiert werden können, bei dem sich der zur Übertragung optimale Kompressionszustand auf einfache Weise reproduzierbar einstellen läßt. Die Qualität der übertragenen Schichten sollte durch das Kompressionsverfahren nicht beeinträchtigt werden. Weiterhin soll das Verfahren die Einstellung der Verweilzeit des komprimierten Films auf der Wasseroberfläche in möglichst weiten Grenzen gestatten. Es bestand ferner die Aufgabe zur Herstellung von Hetero-Mehrfachschichten oder alternierenden Mehrfachschichten auf einem Träger, zwei kontinuierlich arbeitende Strömungskanäle zur Oberflächenkompression von amphiphilen Schichten auf einer Subphase so auszugestalten, daß sich trotz kommunizierender Subphase in jedem System der erforderliche Strömungsdruck separat einstellen läßt.

Diese Aufgaben werden durch die vorliegende Erfindung gelöst. Es wurde nun ein Verfahren zur kontinuierlichen Erzeugung einer ultradünnen, geordneten Schicht aus amphiphilen Molekülen an der Oberfläche einer polaren Flüssigkeit gefunden, wobei man in einem Kanal eine gerichtete Strömung der polaren Flüssigkeit erzeugt, die die amphiphilen Moleküle gelöst oder ungelöst an der Oberfläche in gespreiteter Form enthält, man in dem Kanal einen Kanalabschnitt mit relativ hoher Strömungsgeschwindigkeit an der Oberfläche vorsieht, der eine am Kanalboden angeordnete, von der polaren Flüssigkeit überspülte Rampe aufweist, und daran anschließend einen Kanalabschnitt mit relativ niedriger Strömungsgeschwindigkeit an der Oberfläche vorsieht, in dem man die Strömung bei zeitlich konstanter Wasserhöhe an einem Hindernis staut, so daß sich in diesem Kanalabschnitt an der Phasengrenze polare Flüssigkeit/Luft durch Strömungskompression laufend eine ultradünne, geordnete Schicht aus amphiphilen Molekülen ausbildet. Dieses Verfahren ist dadurch ausgezeichnet, daß die überspülte Rampe beweglich angeordnet ist.

Nach einer Ausgestaltung dieser Erfindung kann die Rampe längs des Strömungskanals verschoben werden. Je weiter die Rampe von dem Strömungshindernis entfernt ist, umso länger ist der durch Kompression an der Oberfläche gebildete Film. Durch eine Höhenverstellung der Rampe läßt sich der Querschnitt in diesem Kanalabschnitt, und damit die Strömungsgeschwindigkeit, variieren. Eine höhere Strömungsgeschwindigkeit (ein geringerer Querschnitt) begünstigt die Ausbildung einer ultradünnen Schicht von amphiphilen Molekülen vor dem Strömungshindernis. Die Höhenverstellung erfolgt am einfachsten von oben durch eine Aufhängung an den Kanalwänden. Es muß jedoch sichergestellt sein, daß die Rampe gegen den Boden dicht ist und nur unbedeutende Menge Subphase, vorzugsweise weniger als 5 % des Strömungsflusses durchläßt. Eine Möglichkeit besteht darin, an mindestens einer Stelle dieses Kanalabschnitts quer zur Strömungsrichtung am Boden eine Tasche vorzusehen, in die dichtend von oben her eine mit der Rampe verbundene höhenverstellbare Platte eingreift. Man kann auch am Boden und an der beweglichen Rampe jeweils einen Halbkeil befestigen und durch einen von außen zwangsweise gesteuerten Zwischenkeil, der sich in Querrichtung dieses Kanalabschnitts erstreckt, eine Höhenverstellung der Rampe erreichen. Man kann ferner eine starre Rampe, die höhenverstellbar angeordnet ist, durch mindestens eine flexible Lippe am Kanalboden abdichten. Beispielsweise kann die Lippe selbst starr sein, z.B. aus PTFE oder Stahl bestehen, und einerseits mit dem Kanalboden und andererseits mit der Rampe jeweils durch ein flexibles Kunststoffband verbunden sein. Eine andere Möglichkeit besteht darin, die Lippe selbst gummielastisch zu gestalten. Vorzugsweise weist die Rampe eine Mindestlänge von 5 cm auf. Falls die Oberseite der Rampe flach ist, was vorteilhaft ist, besteht auch die Möglichkeit, die Neigung der Rampe zu verstellen.

Als Hindernis für die Strömung im Strömungskanal kann eine begrenzende Stirnwand des Kanals, ein Wehr an der Wasseroberfläche des Kanals oder das zu beschichtende Substrat selbst dienen. In letzterem Fall ist es zweckmäßig, daß die Breite des Substrates mit der Kanalbreite übereinstimmt.

Eine erfindungsgemäße Vorrichtung zum kontinuierlichen Erzeugen einer ultradünnen Schicht aus amphiphilen Molekülen auf der Oberfläche einer polaren Flüssigkeit enthält
a) mindestens einen Strömungskanal zur Aufnahme einer Flüssigkeit, mit einem Kanalabschnitt mit relativ geringem Querschnitt, der eine am Kanalboden befestigte Rampe aufweist, und daran in Strömungsrichtung anschließend einem Kanalabschnitt mit relativ großem Querschnitt, der in Strömungsrichtung durch ein Hindernis begrenzt wird,
b) eine Vorrichtung zur Erzeugung der Strömung der Flüssigkeit, enthaltend
   b1) Mittel zum Entfernen von strömender Flüssigkeit in der Nähe des Strömungshindernisses sowie
   b2) Mittel zur Aufgabe von Flüssigkeit, und
c) eine Vorrichtung zur Aufgabe von amphiphilen Molekülen.

Diese Vorrichtung ist dadurch gekennzeichnet, daß die Rampe am Kanalboden beweglich angeordnet ist. Vorzugsweise beträgt das Verhältnis der Querschnitte der Kanalabschnitte mit relativ großem und relativ kleinem Querschnitt mindestens 1,1:1, vorzugsweise mindestens 1,5:1, insbesondere mindestens 5:1. Unlösliche und schwerlösliche Amphiphile werden in gelöster Form nahe dem Ort der Aufgabe der (polaren) Flüssigkeit aufgegeben. Bei löslichen Amphiphilen ist der Ort der Zugabe nicht kritisch.

Die Übertragung des komprimierten Films auf einen Träger (Substrat) kann in an sich bekannter Weise nach der von Langmuir und Blodgett angegebenen Technik erfolgen. Durch wiederholtes Ein- und Austauchen des Substrates lassen sich Mehrfachschichten übereinander erzeugen. Es ist aber auch eine kontinuierliche Übertragung beispielsweise auf Drähte oder Bänder möglich, die etwa über Umlenkrollen der Länge nach durch den Film transportiert werden.

Das filmbildende spreitbare Material kann aus ionogenen oder nichtionogenen niedermolekularen Amphiphilen oder Polymeren bestehen. Bei Polymeren kommen auch solche in Frage, die nicht eine typische Amphiphilenstruktur haben. Es können sowohl reine Verbindungen wie auch Mischungen verwendet werden.

Als Gasphase über dem Film kommen Inertgase oder auch mit dem Film reagierende Gase oder Gasmischungen zur Verwendung. In den meisten Fällen kann Luft verwendet werden. Als polare Flüssigkeit wird in der Regel Wasser eingesetzt. Es kommen aber auch wäßrige Lösungen, Glyzerin oder Mischungen in Frage.

Die Strömung im Kanal kann laminar oder turbulent sein. Es ist jedoch günstig, wenn sie möglichst weitgehend laminar ist, damit der Film nicht durch Scherbewegungen in seiner Struktur und Homogenität beeinträchtigt wird.

Die Wasserhöhe (Pegelstand der polaren Flüssigkeit) im Strömungskanal kann durch die Gleichhaltung der Zufluß- und Abflußmengen zeitlich konstantgehalten werden. Bei längerem Betrieb kann dann ein Ersatz von verdunsteter Flüssigkeit notwendig sein, so daß eine Flüssigkeitsstandsregelung von Vorteil ist. Günstiger aber ist die Konstanthaltung des Flüssigkeitspegels mittels eines Überlaufs, der z.B. aus einem senkrechten nach oben hin offenen Rohr als Abfluß oder aus einer senkrechten Wand mit dahinterliegendem Abfluß bestehen kann. In letzterem Fall bestimmt die Oberkante der Wand den Flüssigkeitspegel.

Der Strömungskanal kann in seinem Grundriß Einschnürungen (zur Vergrößerung der Strömungsgeschwindigkeit) und Verbreiterungen aufweisen. Vorteilhaft ist eine gleichbleibende Breite des Kanals vom Ort des Aufspreitens bis hin zum Ort, an dem der Film auf das Substrat übertragen wird. In der Nähe des Flüssigkeitseinlasses ist der Kanal vorzugsweise relativ tief (großer Querschnitt), damit die Flüssigkeit in diesem Abschnitt relativ langsam strömt. Ebenso könnte der Kanal an dieser Stelle flach sein und dafür größere Breite aufweisen. Auf diesem Abschnitt wird das filmbildende Material gespreitet, und mit der langsamen Strömung verbleibt genügend Zeit zum Verdampfen des Lösungsmittels, in dem die amphiphilen Moleküle gelöst sind. An diesen Abschnitt schließt sich der Abschnitt mit relativ hoher Strömungsgeschwindigkeit an (flacher Querschnitt). In diesem Abschnitt befindet sich die beweglich angeordnete Rampe. Zum Boden des Kanals hin ist die Rampe abgedichtet, so daß praktisch die gesamte Flüssigkeitsmenge mit hoher Geschwindigkeit oberhalb der Rampe fließen muß. Die Einstellung der Rampenhöhe ermöglicht eine rückwirkungsfreie Einstellung der Stärke der Filmkompression. An diesen flachen Kanalabschnitt schließt sich wiederum ein tiefer an, in dem die Filmübertragung erfolgt. Die Messung des Kompressionszustandes kann auf den verschiedenen Kanalabschnitten mit Wilhelmy-Waagen erfolgen.

In einer besonderen Ausgestaltung des erfindungsgemäßen Verfahrens der Filmerzeugung auf der Oberfläche der polaren Flüssigkeit kann die Verweilzeit des komprimierten Films auf der Oberfläche und damit seine Alterungszeit zum Zwecke besseren Übertragungsverhaltens eingestellt werden. Dabei kommt es darauf an, die Länge des vor dem Strömungshindernis an der Grenzfläche Flüssigkeit/Luft ausgebildeten monomolekularen Films zu verändern. Dies gelingt z.B. dadurch, daß die Rampe in Strömungsrichtung aufwärts oder abwärts geneigt wird. Vorteilhaft ist es, die Neigung während des Betriebs einstellen zu können. Bevorzugte Neigungswinkel liegen zwischen -20 Grad und +20 Grad. Hiermit ist es möglich, unterschiedliche Profile des Kompressionszustandes entlang dem flachen Kanalabschnitt einzustellen. Diese Maßnahmen bewirken, daß die Verweilzeit des komprimierten Films in weiten Grenzen einstellbar ist und die Verweilzeit dem für das jeweilige filmbildende Material optimalen Alterungszustand angepaßt werden kann. Eine weitere Möglichkeit zur Einstellung der Verweilzeit ergibt sich durch horizontales Verschieben der Rampe gegen die Strömungsrichtung (längere Verweilzeit) oder in Strömungsrichtung (kürzere Verweilzeit).

Eine erfindungsgemäße Vorrichtung zur Beschichtung eines Substrates mit einzelnen Schichten oder Mehrfachschichten einer spreitbaren Verbindung enthält folgende wesentliche Bestandteile:
1. Einen Kanal für die gerichtete Strömung einer polaren Flüssigkeit. In dem Kanal befindet sich ein Kanalabschnitt mit relativ großem Querschnitt, der eine am Kanalboden beweglich befestigte Rampe aufweist, beispielsweise eine höhenverstellbare und/oder neigungsverstellbare Rampe zur einstellbaren Erhöhung der Strömungsgeschwindigkeit und zur Einstellung des Kompressionszustandes und der Verweilzeit des Oberflächenfilms. Daran schließt sich in Strömungsrichtung ein Kanalabschnitt mit relativ großem Querschnitt an, der in Strömungsrichtung durch ein Hindernis begrenzt wird.
2. eine Vorrichtung zur Erzeugung der Flüssigkeitsströmung,
3. eine Vorrichtung zum Aufspreiten des filmbildenden Materials,
4. eine Vorrichtung zum Übertragen des Films auf Substrate durch Ein- bzw. Austauchen durch die filmbedeckte Flüssigkeitsoberfläche.

Der Kanal kann ein Gefälle haben, so daß die Flüssigkeit von selbst strömt. Am Kanal kann sich zum Konstanthalten des Flüssigkeitspegels ein Überlauf befinden, über den die Flüssigkeit in ein Vorratsgefäß fließt. Aus diesem Vorratsgefäß kann die Flüssigkeit mittels einer Pumpe zum Einlaß des Kanals zurückgeführt werden. Zwischen Pumpe und Einlaß können sich Vorrichtungen zum Temperieren und Reinhalten der Flüssigkeit befinden.

Der Kanal soll eine Mindestlänge haben, so daß sich eine gleichmäßige gerichtete Strömung ausbilden kann. Die Oberfläche des Kanals kann Verjüngungen oder Verbreiterungen aufweisen. Vorteilhaft ist aber eine gleichbleibende Breite der Kanaloberfläche. Der Kanal hat im Bereich der Rampe vorzugsweise einen rechteckigen Querschnitt. In den anderen Bereichen kann die Form des Querschnittes davon abweichen.

Die höhenverstellbare Rampe im Kanal ist an ihren Enden zweckmäßigerweise so geformt, daß das Ein- und Auströmen der Flüssigkeit aus dem Bereich der Rampe möglichst gleichmäßig gerichtet verläuft und die Strömungsgeschwindigkeit sich über den Querschnitt des Kanals möglichst wenig ändert. Die Höhenverstellung kann beispielsweise dadurch realisiert sein, daß die Rampe durch zwei oder mehr Gestelle unterstützt ist, die von außen vertikal verschoben werden können. Unterhalb der Rampe befindet sich eine Abdichtung gegen den Boden des Kanals, die einen Flüssigkeitsstrom unterhalb der Rampe verhindert.

Das Aufspreiten einer Lösung des filmbildenden Materials kann z.B. mit einer Spritzenkanüle oder einer Kapillare aus PTFE erfolgen. Bei breiten Strömungskanälen ist eine kammartiger Anordnung mehrerer Kapillaren oder Kanülen vorzuziehen. Ebenfalls günstig ist eine Vorrichtung, bei der aus einem engen Spalt die Lösung zugeführt werden kann. Die Dosierung der Lösung kann von Hand, besser aber mit Hilfe einer automatische Dosiervorrichtung, z.B. einer Motorbürette, erfolgen.

Vorrichtungen zum Ein- und Austauchen eines Substrates in eine Flüssigkeit sind von der Langmuir-Blodgett-Technik her dem Fachmann bekannt. Vorrichtungen zum kontinuierlichen Ein- und Austauchen bzw. Durchziehen von draht- oder bandförmigen Substraten durch Flüssigkeitsoberflächen sind dem Fachmann ebenfalls bekannt.

Man kann auch zwei oder mehr Strömungskanäle der oben beschriebenen Art in einem Trog mit gemeinsamer polarer flüssiger Phase kombinieren und zur Herstellung alternierender Mehrfachschichtsysteme einsetzen. Mit Hilfe der verstellbaren Rampen in den Kanälen ist es möglich, für Filme aus verschiedenartigen Substanzen unabhängig voneinander ohne Rückwirkung auf die jeweils anderen Filme den Kompressionszustand und die Verweilzeit einzustellen.

Im Falle einer diskontinuierlichen Filmübertragung auf starre flache Substrate ist eine parallele Anordnung der Kanäle mit gleichsinniger Strömungsrichtung günstig. Hierbei befinden sich in der Nähe des Ortes der Schichtübertragung in den Kanalseitenwänden Schleusen auf Höhe der Flüssigkeitsoberfläche, durch die eine Halterung für das zu beschichtende Substrat geführt werden kann, und unterhalb der Schleusen befinden sich Ausschnitte in den Seitenwänden, so daß das Substrat in eingetauchtem Zustand unter einen anderen Film transportiert werden kann, ohne daß sich die Oberflächenfilme vermischen. Besonders vorteilhaft ist es, wenn zwischen den Schleusen sich ein Bereich mit Flüssigkeitsoberfläche befindet, der von keinem Film bedeckt ist. Auf diese Weise können gegenseitige Vermischungen der Oberflächenfilme völlig ausgeschlossen werden. Die zu beschichtende Substratoberfläche wird beim Ein- und Austauchen in die filmbedeckte polare Flüssigkeit vorzugsweise gegen die Strömungsrichtung im Kanal ausgerichtet.

Im Falle der kontinuierlichen Beschichtung von flexiblen draht- oder bandartigen Substraten sind Schleusen in der Wand, die an der Oberfläche beide Kanalsysteme trennt, nicht nötig. Hier wird der Draht bzw. das Band durch unterhalb der Oberfläche befindliche Ausschnitte in der Kanalwand geführt, so daß beim Ein- und Austauchen unterschiedliche Filmmaterialien übertragen werden können. Zur Führung solcher Substrate können Rollen verwendet werden, die sich oberhalb oder unterhalb der Flüssigkeitsoberfläche befinden.

Bei der Beschichtung von Bändern mit zwei unterschiedlichen Filmsorten ist eine frontale Anordnung der beiden Kanäle besonders vorteilhaft, wobei sich der Ausschnitt zum Durchführen des Substrates in der gemeinsamen Stirnwand der Kanäle befindet. Die zu beschichtende Oberfläche des Bandes ist dabei jeweils gegen die Strömungsrichtung gerichtet. Hierdurch wird eine gute Schichtqualität gewährleistet.

Eine Ausgestaltung der Erfindung betrifft ein Verfahren zum zeitlich aufeinanderfolgenden Beschichten eines starren Substrats mit ultradünnen, regelmäßig angeordneten Filmen einer ersten und einer zweiten amphiphilen Verbindung, wobei man durch Spreitung und Kompression an der Grenzfläche polare Flüssigkeit/Luft in einer ersten Kammer einen Film der ersten amphiphilen Verbindung und in einer zweiten Kammer einen Film der zweiten amphiphilen Verbindung herstellt, man die Phasen der polaren Flüssigkeit in beiden Kammern miteinander kommunizieren läßt und die Kammern voneinander an der Oberfläche durch mindestens eine Wand mit Schleuse getrennt sind, man ein Substrat in die Oberfläche der ersten Kammer eintaucht und dabei mit dem Film der ersten amphiphilen Verbindung beschichtet, man das Substrat in getauchtem Zustand durch mindestens eine Schleuse in die zweite Kammer bewegt, dort austaucht und dabei mit einem Film der zweiten amphiphilen Verbindung beschichtet. Das Verfahren ist dadurch gekennzeichnet, daß die erste Kammer und die zweite Kammer jeweils Bestandteil einer oben erwähnten Vorrichtung zum Übertragen einer kontinuierlich gebildeten ultradünnen Schicht aus amphiphilen Molekülen auf ein Substrat sind. Alternativ ist es auch möglich, daß man zur Schichtübertragung das Substrat außerhalb der ersten Kammer eintaucht, in getauchtem Zustand durch mindestens eine Oberflächenschleuse in die erste Kammer transportiert, dort austaucht und dabei mit dem Film der ersten amphiphilen Verbindung beschichtet, man das Substrat in die zweite Kammer eintaucht und dabei mit dem Film der zweiten amphiphilen Verbindung beschichtet und man das Substrat in getauchtem Zustand durch mindestens eine Oberflächenschleuse aus der zweiten Kammer entfernt.

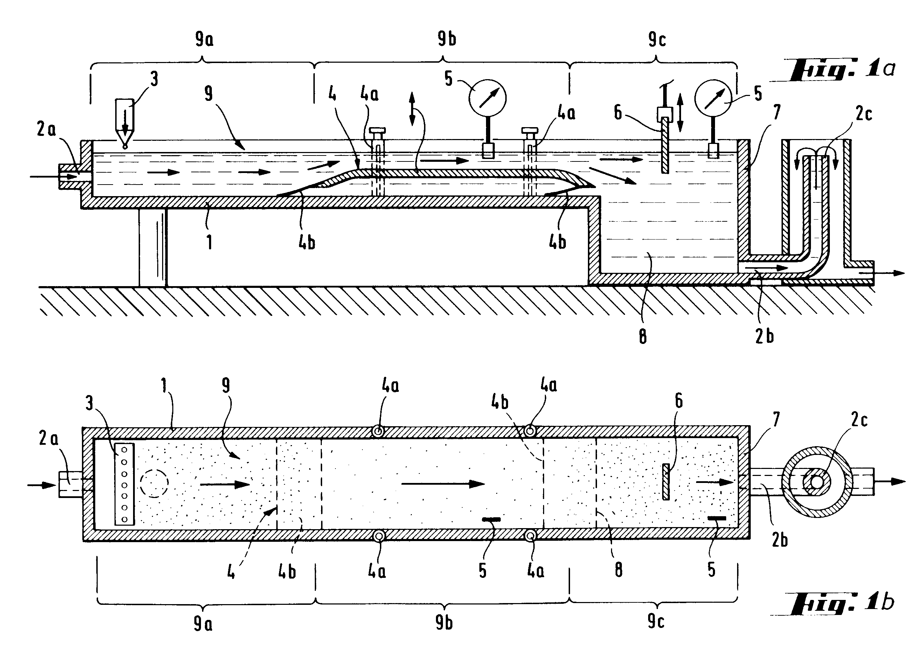

Eine bevorzugte Vorrichtung zur Beschichtung von Substraten ist in Abb. 1a und Abb. 1b dargestellt: Der Strömungskanal 9 wird verwendet, um eine gerichtete Strömung einer polaren Flüssigkeit zu erzeugen. Die Flüssigkeit tritt durch den Einlaß 2a in den Strömungskanal ein und durch 2b und den Überlauf 2c wieder aus. Der Überlauf dient zum Konstanthalten des Flüssigkeitspegels im Kanal. Hiernach fließt die Flüssigkeit in ein Puffergefäß (nicht gezeichnet) und kann von dort mittels einer geeigneten Pumpe (ebenfalls nicht gezeichnet) ggf. unter Zwischenschaltung von Reinigungsstufen wie Filtern etc. wieder zum Einlaß 2a zurückgeführt werden. Die Flüssigkeit kann aber auch verworfen werden, wenn bei 2a neue Flüssigkeit zugeführt wird. Die Rampe 4 bewirkt eine vertikale Verengung des Strömungskanals. Durch die flexible Abdichtung 4b ist die Rampe zum Boden hin abgedichtet, so daß die Flüssigkeit mit erhöhter Geschwindigkeit über der Rampe entlangströmen muß. Die Höhe der Rampe kann mittels der Aufhängevorrichtungen 4a verstellt werden, so daß die Verengung des Kanals und damit in weiten Grenzen die Strömungsgeschwindigkeit der Flüssigkeit oberhalb der Rampe eingestellt werden kann.

Mit Hilfe der Aufgabevorrichtung 3, die z.B. eine Spritzenkanüle oder eine Kapillare aus PTFE sein kann, wird filmbildendes Material in geeignetem spreitbaren Lösungsmittel auf die Flüssigkeitsoberfläche gegeben und gespreitet. Durch die langsame Strömung stromaufwärts im Bereich 9a vor der Rampe soll genügend Zeit zum Verdampfen des Lösungsmittels verbleiben, bis die gespreiteten Moleküle den Anfang der Rampe erreicht haben. Dort wird auf sie im Bereich 9b aufgrund der schnellen Strömung eine Kraft in Strömungsrichtung ausgeübt und damit der Film komprimiert, bis kurz nach Ende der Rampe am Ort der Filmübertragung (Bereich 9c) auf das Substrat 6 der für eine optimale Übertragung nötige Kompressionszustand erreicht ist. Vorzugsweise ist jeder der Bereiche 9a, 9b und 9c mindestens 5 cm lang. Gestaut wird der Film an der rechten Begrenzungswand 7 des Kanals (Stirnwand). Die Stärke der Kompression kann mit Hilfe der Wilhelmy-Waagen 5 gemessen werden. Der optimale Kompressionszustand kann durch Höhenverstellung der Rampe 4 mit Hilfe der Vorrichtung 4a ohne Rückwirkung auf den Flüssigkeitsstand im Kanal und die Strömungsmenge, die pro Zeiteinheit bei 2a eintritt und bei 2b wieder austritt, reproduzierbar und exakt eingestellt werden. Das Substrat 6 wird mit einer geeigneten mechanischen Vorrichtung (Filmlift) durch den Film ein- und wieder ausgetaucht, wobei der Film übertragen wird und auf dem Substrat Mehrfachschichten entstehen. Die Vertiefung 8 des Kanals dient dazu, daß auch lange feste Substrate genügend tief eingetaucht werden können.

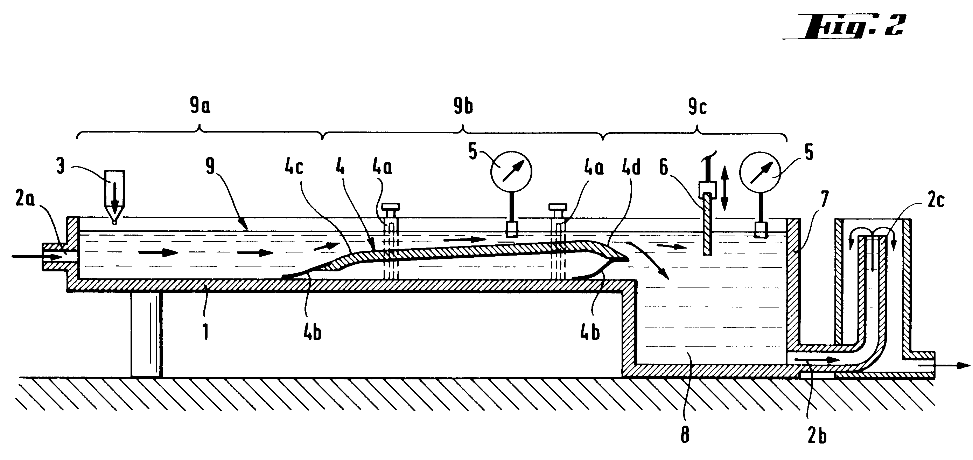

In einer besonderen Ausführung können die Strömungskanäle nicht nur in ihrer Höhe verstellt sondern auch gegenüber der Wasseroberfläche in Strömungsrichtung geneigt werden, wie es in Abb. 2 dargestellt ist. Dies bedeutet, daß während des Beschichtungsbetriebes der Ort, an dem die stärkste Filmkompression stattfindet bzw. das Kompressionsprofil des komprimierten Films in Strömungsrichtung verändert werden kann. In Abb. 2 ist die dem Flüssigkeitseinlaß 2a zugewandte Seite 4c der Rampe abgesenkt und die dem Auslaß zugewandte Seite 4d angehoben. Mit dieser Einstellung wird die Länge des komprimierten Films und damit die Verweilzeit gegenüber der horizontalen Einstellung verkürzt. Umgekehrt kann die Verweilzeit auch verlängert werden. Es ist damit die Möglichkeit gegeben, die Verweilzeit des Films auf der Wasseroberfläche bis zum Beschichtungszeitpunkt den Erfordernissen der jeweiligen Filmsorte individuell und optimal anzupassen. Dies ist wichtig bei Filmen, die in bestimmten Alterungsphasen besonders gutes oder schlechtes Übertragungsverhalten zeigen, wie es beispielsweise bei 22-Tricosensäurefilmen der Fall ist.

Wie bereits oben erwähnt, enthält eine erfindungsgemäße Vorrichtung, die besonders gut zur Herstellung von Hetero-Mehrfachschichten oder alternierenden Mehrfachschichten geeignet ist, zwei oder mehr miteinander verbundene Strömungskanäle mit gemeinsamer flüssiger Phase.

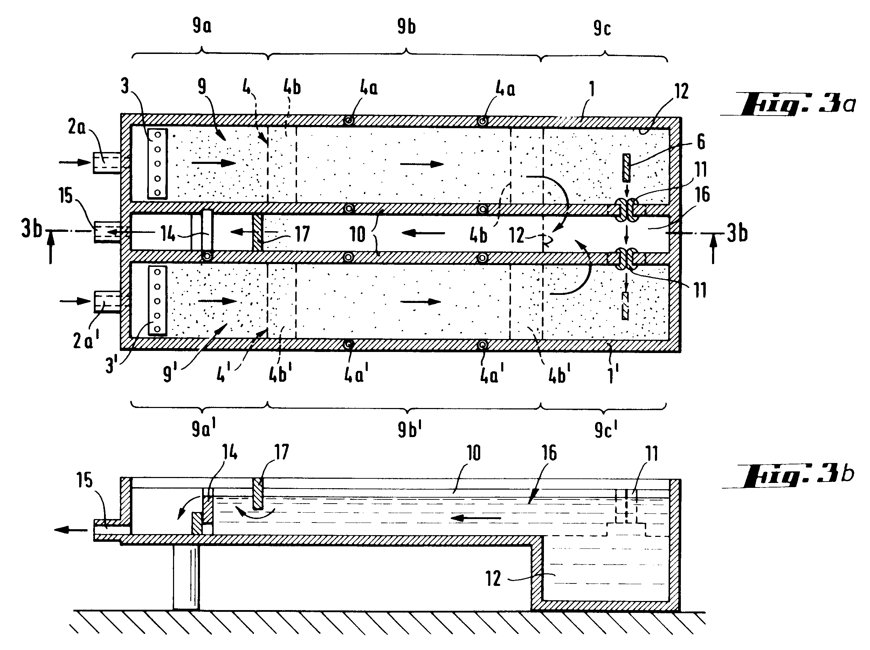

Eine Ausführungsform dieser Vorrichtung, die für die diskontinuierliche Beschichtung rigider Substrate mit Mehrfachschichten aus zwei verschiedenen Substanzen besonders gut geeignet ist, ist in den Abb. 3a und 3b dargestellt. Abb. 3a zeigt eine Aufsicht und Abb. 3b einen vertikalen Längsschnitt durch die Mitte der Anordnung.

Die beiden Kanäle 9 und 9' sind parallel angeordnet und sind ebenso wie oben beschrieben versehen mit Flüssigkeitseinlässen 2a (und 2a'), Rampen 4 (und 4') sowie Höhenverstelleinrichtungen 4a (und 4a') und Abdichtungen 4b und 4b' für die Rampen 4 und 4'. Die Aufspreitorte liegen bei 9a (und 9a') und die Orte zum Ein- bzw. Austauchen des Substrates bei 9c (und 9c'). Zum Transport des Substrates von einem Kanal zum anderen in eingetauchtem Zustand sind die inneren Seitenwände 10 der Kanalabschnitte 9c mit Aussparungen 12 und Schleusen 11 versehen, die das Durchführen des Substrats oder der Substrathalterung gestatten, ohne daß der komprimierte Oberflächenfilm aus den Bereichen 9c entweicht. Der Bereich 16 zwischen den Kanälen dient zum Rückführen der polaren Flüssigkeit, die über den Überlauf 14 in den Auslaß 15 fließt. Eine weitere Aufgabe dieses Bereiches zwischen den Kanälen ist die vollständige Verhinderung einer gegenseitigen Vermischung der Oberflächenfilme in den beiden Kanälen. Geringe Substanzmengen, die beim Schleusendurchtritt in diesen Bereich gelangen könnten, werden mit der Wasserströmung in Richtung des Wehrs 17 transportiert. Dort werden sie aufgestaut und können abgesaugt werden.

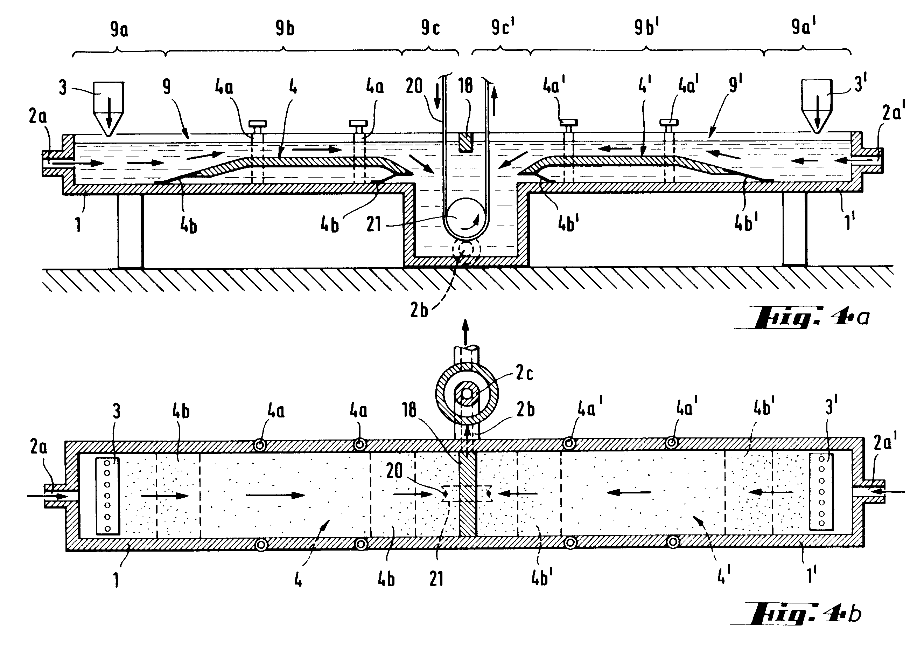

Eine andere Ausführungsform einer Vorrichtung zur Erzeugung und zum Übertragen von Filmen eignet sich zur kontinuierlichen Übertragung zweier verschiedener Oberflächenfilme auf draht- oder bandförmige Substrate. Sie ist in Abb. 4a und 4b dargestellt. In dieser Vorrichtung sind die beiden hierfür notwendigen Kanäle frontal zueinander angeordnet. Die Vorrichtung ist wiederum versehen mit Einlässen 2a und 2a', Rampen 4 und 4' mit Verstelleinrichtungen 4a, 4a' und Abdichtungen 4b und 4b', kammförmigen Aufspreitvorrichtungen 3, einem Auslaß 2b und einem Überlauf 2c, mit dem der Flüssigkeitspegel konstant gehalten wird. Die beiden Oberflächenfilme werden durch eine Barriere 18 voneinander getrennt, die sich in der Mitte zwischen beiden Kanäle an der Flüssigkeitsoberfläche befindet. Das Substrat 20 wird mit Hilfe der getauchten Walze 21 so geführt, daß es beim Eintauchen mit dem Oberflächenfilm an der Oberfläche 9c und beim Austauchen mit dem Oberflächenfilm an der Oberfläche 9c' beschichtet wird.

Die nach dem erfindungsgemäßen Verfahren erzeugten Schichten lassen sich für viele Zwecke verwenden. Beispielsweise in der nichtlinearen Optik für parametrische Effekte, in elektronischen Bauelementen als dünne Isolierschichten oder als oberflächenfixierte Rezeptorschichten in Biosensoren. Ebenfalls möglich ist der Einsatz in dünnen selektiven Trennmembranen.

Die Erfindung wird durch folgende Beispiele näher erläutert.

### Beispiel 1

Verwendet wurde eine Apparatur mit einem Kanal entsprechend Abb 1. Als polare Flüssigkeit wurde Reinstwasser (18 MOhm) verwendet. Die Durchflußmenge betrug etwa 1,7 l/min. Der Kanal hatte eine Breite von 120 mm, die Rampenlänge betrug etwa 250 mm. Auf das Wasser wurde eine verdünnte Lösung (Konzentration: 1 g/l) einer polymeren amphiphilen Substanz vor der Rampe gespreitet. Die Wasserhöhe im Trog wurde so eingestellt, daß der mittels Wilhelmy-Waagen gemessene Filmdruck etwa 10 mN/m betrug. Anschließend wurde die Rampe mittels Stellschrauben um 3 Umdrehungen nach oben verstellt, so daß sich ein Filmdruck von 20 mN/m ergab. Bei diesem Druck wurde ein gereinigtes Siliziumplättchen durch die filmbedeckte Wasseroberfläche getaucht und der Film übertragen.
Durch Randwinkelmessungen konnte die Übertragung auf das Siliziumplättchen nachgewiesen werden. Die Proben wurden mit dem Lichtmikroskop auf Defekte untersucht; hierbei waren keine Defekte festzustellen. Eine ellipsometrische Schichtdickenbestimmung ergab die gleiche Schichtdicke pro Monoschicht, wie sie auch an konventionell hergestellten Schichten aus derselben Substanz gemessen wurde.

### Beispiel 2

Verwendet wurde die gleiche Apparatur wie in Beispiel 1. Es wurde eine Lösung aus 22-Tricosensäure gespreitet. Die mittlere Verweilzeit des Films auf der Wasseroberfläche betrug bei den eingestellten Bedingungen etwa 30 min. Bei einem Filmdruck von 25 mN/m wurden 30 Monoschichten auf ein Silziumsubstrat übertragen. Die Proben zeigten unter dem Lichtmikroskop Defekte.

Die Wasserhöhe im Trog wurde erhöht um die Rampe schräg stellen zu können (vergl. Abb. 2). Die hinteren Schrauben wurden in ihre niedrigste Position und die vorderen Schrauben um etwa 4 Umdrehungen nach oben gedreht. Es stellte sich so am Ende der Rampe der gleiche Druck wie bei waagrecht stehender Rampe ein. Die Verweilzeit des Films auf der Wasseroberfläche betrug etwa 15 Minuten. Ein Siliziumsubstrat wurde mit 30 Schichten beschichtet und war unter dem Mikroskop betrachtet defektfrei.

### Beispiel 3

Es wurde die oben beschriebene Apparatur mit zwei parallelen Kanälen entsprechend Abb. 3 verwendet. Die Durchflußmenge pro Kanal betrug 1,7 l/min. Die Breite jedes Kanals betrug 120 mm und die Rampenlänge ca. 300 mm.
Gespreitet wurde auf einem Kanal (A) ein nichtlinear optisch aktives amphiphiles 4-Nitrophenylhydrazon (FA06) des 4-n-Octadecyloxy-benzaldehyds und auf dem anderen Kanal (B) Acrylsäureoctadecylamid AODA jeweils als verdünnte Lösung mit einer Konzentration von 1 g/l. Es stellte sich bei gleichem Stand beider Rampen in dem Kanal A ein Filmdruck von 10 mN/mm und in Kanal B ein Filmdruck von 14 mN/m ein. Durch Verdrehen der Schrauben in Kanal A um 2 Umdrehungen und in Kanal B um 2,5 Umdrehungen ergab sich in Kanal A ein Druck von 17 mN/mm und in Kanal B ein Druck von 23 mN/m. Unter diesen Bedingungen wurden alternierende Schichten aus den beiden Materialien übertragen. Als Substrate wurden Silizium- sowie Glassubstrate verwendet.
Zur Überprüfung des Schichtaufbaus der AB-Schichten wurden ellipsometrische und nichtlinear optische Untersuchungen durchgeführt.
Hierzu wurden 10, 20, 30 und 50 AB-Schichtzyklen auf Siliziumsubstrate übertragen. Die Schichtdickenbestimmung mit dem Ellipsometer ergab eine Schichtdicke von 6.3 nm pro AB-Schichtzyklus. Zum Vergleich wurden jeweils Schichten mit der gleichen Zykluszahl aus nur FA06 bzw. AODA hergestellt. Die ellipsometrische Schichtdickenbestimmung ergab für AODA eine Monoschichtdicke von 3 nm und für FA06 von 3.3 nm. Somit ergibt sich die Schichtdicke eines AB-Zyklus aus den Monoschichtdicken der Einzelschichten.

Durch die Messung der nichtlinear optischen Eigenschaften zweiter Ordnung in den AB-Schichtsystemen kann die Orientierung der FA06-Schichten im alternierenden Multischichtsystem bestimmt werden und mit der Orientierung von FA06-Monoschichten verglichen werden. Die Messungen wurden an einer Maker Fringe Apparatur (Maker et. al., Phys.Rev. Lett. 8,21 (1962)) mit Monoschichten aus FA06 und AB-Schichten mit 10, 20, 30 und 50 Schichtzyklen durchgeführt. Die Ergebnisse aus diesen Messungen zeigen, daß die FA06-Schichten im AB-Schichtsystem gleich gut wie in der Monoschicht orientiert sind.

## Patentansprüche

1. Verfahren zum kontinuierlichen Erzeugen einer ultradünnen, geordneten Schicht aus amphiphilen Molekülen an der Oberfläche einer polaren Flüssigkeit, wobei man in einem Kanal (9) eine gerichtete Strömung der polaren Flüssigkeit erzeugt, die die amphiphilen Moleküle gelöst oder ungelöst an der Oberfläche in gespreiteter Form enthält, man in dem Kanal einen Kanalabschnitt (9b) mit relativ hoher Strömungsgeschwindigkeit an der Oberfläche vorsieht, der eine am Kanalboden angeordnete, von der polaren Flüssigkeit überspülte Rampe (4) aufweist, und daran anschließend einen Kanalabschnitt (9c) mit relativ niedriger Strömungsgeschwindigkeit an der Oberfläche vorsieht, in dem man die Strömung bei zeitlich konstanter Flüssigkeitshöhe an einem Hindernis (7) staut, so daß sich in diesen Kanalabschnitten an der Phasengrenze polare Flüssigkeit/Luft durch Strömungskompression laufend eine ultradünne geordnete Schicht aus amphiphilen Molekülen ausbildet, dadurch gekennzeichnet, daß die überspülte Rampe (4) beweglich angeordnet wird.

2. Verfahren nach Anspruch 1, dadurch gekennzeichnet, daß die Höhe der Rampe (4) verstellbar ist.

3. Verfahren nach Anspruch 1, dadurch gekennzeichnet, daß die Rampe in Kanalrichtung beweglich ist.

4. Verfahren nach Anspruch 1, dadurch gekennzeichnet, daß die Oberseite der Rampe (4) flach ausgebildet ist und die Neigung der Rampe verstellbar ist.

5. Verfahren nach Anspruch 1, dadurch gekennzeichnet, daß die Rampe (4) eine Länge von mindestens 5 cm aufweist.

6. Vorrichtung zum kontinuierlichen Erzeugen einer monomolekularen Schicht aus amphiphilen Molekülen auf der Oberfläche einer polaren Flüssigkeit, enthaltend
1. mindestens einen Strömungskanal (9) zur Aufnahme einer Flüssigkeit mit einem Kanalabschnitt mit relativ geringem Querschnitt (9b), der eine am Kanalboden befestigte Rampe (4) aufweist, und daran in Strömungsrichtung anschließend einen Kanalabschnitt mit relativ großem Querschnitt (9c), der in Strömungsrichtung durch ein Hindernis (7) begrenzt wird;
2. Eine Vorrichtung zur Erzeugung der Strömung der Flüssigkeit enthaltend
2.1 Mittel (2b, 2c) zum Entfernen von strömender Flüssigkeit in der Nähe des Strömungshindernisses und
2.2 Mittel (2a) zur Aufgabe von Flüssigkeit,
3. Eine Vorrichtung (3) zur Aufgabe von amphiphilen Molekülen, dadurch gekennzeichnet, daß
die Rampe (4) am Kanalboden beweglich angeordnet ist.

7. Verfahren zur Herstellung eines beschichteten Substrats, wobei man auf einer polaren Flüssigkeit eine ultradünne Schicht einer amphiphilen Verbindung erzeugt, man ein Substrat (6) in die polare Flüssigkeit durch diesen Film eintaucht und/oder durch diesen Film austaucht und dabei mindestens eine ultradünne Schicht der amphiphilen Verbindung auf das Substrat (6) überträgt, dadurch gekennzeichnet, daß man nach dem Verfahren von Anspruch 1 eine ultradünne Schicht auf der Oberfläche einer polaren Flüssigkeit erzeugt.

8. Verfahren zum zeitlich aufeinanderfolgenden Beschichten eines starren Substrats (6) mit ultradünnen, regelmäßig angeordneten Filmen einer ersten und einer zweiten amphiphilen Verbindung, wobei man durch Spreitung und Kompression an der Grenzfläche polare Flüssigkeit/Luft in einer ersten Kammer (1) einen Film der ersten amphiphilen Verbindung und in einer zweiten Kammer (1') einen Film der zweiten amphiphilen Verbindung herstellt, man die Phasen der polaren Flüssigkeit in beiden Kammern (1, 1') miteinander kommunizieren läßt und die Kammern voneinander an der Oberfläche durch mindestens eine Wand (10) mit Schleuse (11) getrennt sind, man ein Substrat (6) in die Oberfläche der ersten Kammer (1) eintaucht und dabei mit dem Film der ersten amphiphilen Verbindung beschichtet, man das Substrat in getauchtem Zustand durch mindestens eine Schleuse (11) in die zweite Kammer (1') bewegt, dort austaucht und dabei mit einem Film der zweiten amphiphilen Verbindung beschichtet, dadurch gekennzeichnet, daß die erste Kammer (1) und die zweite Kammer (1') Bestandteil der Apparatur gemäß Anspruch 6 sind und jeweils Kanalabschnitte mit relativ großem Querschnitt darstellen.

9. Verfahren zum zeitlich aufeinanderfolgenden Beschichten eines starren Substrats mit ultradünnen, regelmäßig angeordneten Filmen einer ersten und einer zweiten amphiphilen Verbindung, wobei man durch Spreitung und Kompression an der Grenzfläche polare Flüssigkeit/Luft in einer ersten Kammer (1) einen Film der ersten amphiphilen Verbindung und in einer zweiten Kammer (1') einen Film der zweiten amphiphilen Verbindung herstellt, man die Phasen der polaren Flüssigkeit in beiden Kammern miteinander kommunizieren läßt und die Kammern (1, 1') voneinander an der Oberfläche durch mindestens eine Wand (10) mit Schleuse (11) getrennt sind, man ein Substrat (6) außerhalb der ersten Kammer (1) eintaucht, in getauchtem Zustand durch mindestens eine Oberflächenschleuse in die erste Kammer (1) transportiert, dort austaucht und dabei mit dem Film der ersten amphiphilen Verbindung beschichtet, man das Substrat (6) in die zweite Kammer (1') eintaucht und dabei mit dem Film der zweiten amphiphilen Verbindung beschichtet und man das Substrat (6) in getauchtem Zustand durch mindestens eine Oberflächenschleuse aus der zweiten Kammer (1') entfernt, dadurch gekennzeichnet, daß die erste Kammer (1) und die zweite Kammer 1' Bestandteil der Apparatur gemäß Anspruch 6 sind und jeweils Kanalabschnitte mit relativ großem Querschnitt darstellen.

10. Verfahren zum Beschichten eines flexiblen, bandförmigen Substrats (20) mit ultradünnen, regelmäßig angeordneten Filmen einer ersten und einer zweiten amphiphilen Verbindung, wobei man durch Spreitung und Kompression an der Grenzfläche polare Flüssigkeit/Luft in einer ersten Kammer (1) einen Film der ersten amphiphilen Verbindung und in einer zweiten Kammer (1') einen Film der zweiten amphiphilen Verbindung herstellt, man die Phasen der polaren Flüssigkeit in beiden Kammern (1, 1') miteinander kommunizieren läßt und die Kammern (1, 1') voneinander an der Oberfläche durch eine Wand (18) getrennt sind, man das flexible Substrat (20) in die Oberfläche der ersten Kammer (1) eintaucht und dabei mit dem Film der ersten amphiphilen Verbindung beschichtet, man das Substrat in getauchtem Zustand unter der Wand (18) in die zweite Kammer (1') transportiert, dort austaucht und dabei mit einem Film der zweiten amphiphilen Verbindung beschichtet, dadurch gekennzeichnet, daß die erste Kammer (1) und die zweite Kammer (1') jeweils Bestandteil einer Apparatur gemäß Anspruch 6 sind und jeweils Kanalabschnitte mit relativ großem Querschnitt darstellen.

11. Verfahren nach einem der Ansprüche 8, 9 oder 10, dadurch gekennzeichnet, daß die erste und die zweite amphiphile Verbindung identisch sind.

12. Verfahren nach Anspruch 8 oder 9, dadurch gekennzeichnet, daß die beiden Strömungskanäle (9, 9') parallel angeordnet sind.

13. Verfahren nach Anspruch 8 oder 9, dadurch gekennzeichnet, daß die beiden Strömungskanäle (9, 9') in Reihe angeordnet sind und die Strömungsrichtung der polaren Flüssigkeit in beiden Strömungskanälen entgegengesetzt ist.

14. Verfahren nach Anspruch 8 oder 9, dadurch gekennzeichnet, daß die beiden miteinander kommunizierenden Kammern (1, 1') mit relativ großem Querschnitt durch eine Kammer getrennt sind, die frei ist von Oberflächenfilm.

15. Vorrichtung zum Übertragen einer kontinuierlich gebildeten ultradünnen Schicht aus amphiphilen Molekülen von der Oberfläche einer polaren Flüssigkeit auf ein Substrat enthaltend
1. mindestens einen Strömungskanal (9) zur Aufnahme einer Flüssigkeit mit einem Kanalabschnitt (9b) mit relativ geringem Querschnitt, der eine am Kanalboden befestigte Rampe (4) aufweist, und daran in Strömungsrichtung anschließend einen Kanalabschnitt (9c) mit relativ großem Querschnitt, der in Strömungsrichtung durch ein Hindernis (7) begrenzt wird,
2. eine Vorrichtung zur Erzeugung der Strömung der Flüssigkeit, enthaltend
2.1 Mittel (2b, 2c) zum Entfernen von strömender Flüssigkeit in der Nähe des Strömungshindernisses und
2.2 Mittel (2a) zur Aufgabe von Flüssigkeit,
3. Eine Vorrichtung (3) zur Aufgabe von amphiphilen Molekülen auf die Oberfläche der Flüssigkeit nahe dem Aufgabeort der Flüssigkeit und
4. Mittel zum Übertragen der kontinuierlich gebildeten ultradünnen Schicht auf ein Substrat (6) durch Eintauchen in die und/oder Austauchen aus der von der ultradünnen Schicht bedeckte Flüssigkeit in dem Kanalabschnitt (9c) mit relativ großem Querschnitt, dadurch gekennzeichnet, daß die Rampe (4) am Kanalboden beweglich befestigt ist.

## Claims

1. A process for the continuous production of an ultrathin, ordered layer of amphiphilic molecules on the surface of a polar liquid, in which a directed flow of the polar liquid containing the amphiphilic molecules in dissolved or undissolved form on the surface in spread form is produced in a duct (9), a duct section (9b) having a relatively high flow rate on the surface is provided in the duct, this duct section comprising a ramp (4) which is arranged on the bottom of the duct and washed over by the polar liquid, and, following this duct section, a duct section (9c) having a relatively low flow rate on the surface is provided, in which the flow is dammed up at an obstacle (7) at a liquid level constant with time, so that an ultrathin ordered layer of amphiphilic molecules is continuously formed in these duct sections at the polar liquid/air phase boundary by flow compression, characterized in that the washed-over ramp (4) is movable.

2. The process as claimed in claim 1, characterized in that the height of the ramp (4) is adjustable.

3. The process as claimed in claim 1, characterized in that the ramp is movable in the direction of the duct.

4. The process as claimed in claim 1, characterized in that the upper side of the ramp (4) is flat and the slope of the ramp is adjustable.

5. The process as claimed in claim 1, characterized in that the ramp (4) has a length of at least 5 cm.

6. A device for the continuous production of a monomolecular layer of amphiphilic molecules on the surface of a polar liquid, containing
1. at least one flow duct (9) for receiving a liquid and comprising a duct section having a relatively small cross section (9b) and a ramp (4) attached to the bottom of the duct, and, following this duct section in the direction of flow, a duct section having a relatively large cross section (9c) which is delimited in the direction of flow by an obstacle (7);
2. a device for producing the flow of liquid, containing
2.1 means (2b, 2c) for removing flowing liquid near the flow obstacle and
2.2 means (2a) for injecting liquid,
3. a device (3) for injecting amphiphilic molecules, characterized in that
the ramp (4) is movably arranged at the bottom of the duct.

7. A process for producing a coated substrate, in which an ultrathin layer of an amphiphilic compound is produced on a polar liquid, a substrate (6) is immersed in the polar liquid through this film and/or withdrawn through this film, as a result of which at least one ultrathin layer of the amphiphilic compound is transferred to the substrate (6), which comprises producing an ultrathin layer on the surface of a polar liquid by the process as claimed in claim 1.

8. A process for consecutive coating of a rigid substrate (6) with ultrathin, regularly arranged films of a first and a second amphiphilic compound, in which a film of the first amphiphilic compound is produced in a first chamber (1) by spreading and compression at the polar liquid/air interface and a film of the second amphiphilic compound is produced in a second chamber (1'), the phases of the polar liquid in both chambers (1, 1') are allowed to communicate with one another and the chambers are separated from one another at the surface by at least one wall (10) comprising a sluice (11), a substrate (6) is immersed in the surface of the first chamber (1), as a result of which it is coated with the film of the first amphiphilic compound, the substrate is moved while immersed through at least one sluice (11) into the second chamber (1'), and there it is withdrawn, as a result of which it is coated with a film of the second amphiphilic compound, characterized in that the first chamber (1) and the second chamber (1') are part of the apparatus as claimed in claim 6 and each represents duct sections having a relatively large cross section.

9. A process for consecutive coating of a rigid substrate with ultrathin, regularly arranged films of a first and a second amphiphilic compound, in which a film of the first amphiphilic compound is produced in a first chamber (1) by spreading and compression at the polar liquid/air interface and a film of the second amphiphilic compound is produced in a second chamber (1'), the phases of the polar liquid in both chambers are allowed to communicate with one another and the chambers (1, 1') are separated from one another at the surface by at least one wall (10) comprising a sluice (11), a substrate (6) is immersed outside the first chamber (1), is transported while immersed through at least one surface sluice into the first chamber (1), and there it is withdrawn, as a result of which it is coated with the film of the first amphiphilic compound, the substrate (6) is immersed in the second chamber (1'), as a result of which it is coated with the film of the second amphiphilic compound, and the substrate (6) is removed while immersed from the second chamber (1') through at least one surface sluice, characterized in that the first chamber (1) and the second chamber (1') are part of the apparatus as claimed in claim 6 and each represents duct sections having a relatively large cross section.

10. A process for coating a flexible, belt-like substrate (20) with ultrathin, regularly arranged films of a first and a second amphiphilic compound, in which a film of the first amphiphilic compound is produced in a first chamber (1) by spreading and compression at the polar liquid/air interface and a film of the second amphiphilic compound is produced in a second chamber (1'), the phases of the polar liquid in both chambers (1, 1') are allowed to communicate with one another and the chambers (1, 1') are separated from one another at the surface by a wall (18), the flexible substrate (20) is immersed in the surface of the first chamber (1), as a result of which it is coated with the film of the first amphiphilic compound, the substrate is transported while immersed below the wall (18) into the second chamber (1'), and there it is withdrawn, as a result of which it is coated with a film of the second amphiphilic compound, characterized in that the first chamber (1) and the second chamber (1') are each part of an apparatus as claimed in claim 6 and each represents duct sections having a relatively large cross section.

11. The process as claimed in one of claims 8, 9 or 10, characterized in that the first and second amphiphilic compounds are identical.

12. The process as claimed in claim 8 or 9, characterized in that the two flow ducts (9, 9') are arranged in parallel.

13. The process as claimed in claim 8 or 9, characterized in that the two flow ducts (9, 9') are arranged in series and the flow direction of the polar liquid in one of the two flow ducts is opposite to that in the other.

14. The process as claimed in claim 8 or 9, characterized in that the two chambers (1, 1') communicating with one another and having a relatively large cross section are separated by a chamber which is free of surface film.

15. A device for transferring a continuously formed ultrathin layer of amphiphilic molecules from the surface of a polar liquid to a substrate containing
1. at least one flow duct (9) for receiving a liquid and comprising a duct section (9b) having a relatively small cross section and a ramp (4) attached to the bottom of the duct, and, following this duct section in the direction of flow, a duct section (9c) having a relatively large cross section which is delimited in the direction of flow by an obstacle (7),
2. a device for producing the flow of liquid, containing
2.1 means (2b, 2c) for removing flowing liquid near the flow obstacle and
2.2 means (2a) for injecting liquid,
3. a device (3) for injecting amphiphilic molecules onto the surface of the liquid near the point of injection of the liquid and
4. means for transferring the continuously formed ultrathin layer to a substrate (6) by immersing it in and/or withdrawing it from the liquid covered by the ultrathin layer in the duct section (9c) having a relatively large cross section, characterized in that the ramp (4) is movably attached to the bottom of the duct.

## Revendications

1. Procédé pour produire en continu une couche ultra-mince disposée de façon régulière et formée de molécules amphiphiles sur la surface d'un liquide polaire, selon lequel on produit, dans un canal (9), un écoulement dirigé du liquide polaire, qui contient les molécules amphiphiles à l'état dissous ou non dissous sur la surface, sous une forme étalée, on prévoit dans le canal une partie (9b) de ce canal avec une vitesse relativement élevée d'écoulement au niveau de la surface, cette partie du canal possédant une rampe (4) disposée sur le fond du canal et balayée par le liquide polaire, et on prévoit à la suite de cette partie de canal une partie (9c) du canal avec une vitesse d'écoulement relativement faible au niveau de la surface et dans laquelle on accumule l'écoulement, pour une hauteur de liquide constante dans le temps, contre un obstacle (7) de sorte qu'une couche ultra-mince, disposée de façon régulière, de molécules amphiphiles se forme en permanence, par compression de l'écoulement, dans ces parties du canal, au niveau de la limite de phase liquide polaire/air, caractérisé en ce que la rampe (4) balayée par l'écoulement est disposée de manière à être mobile.

2. Procédé selon la revendication 1, caractérisé en ce que la hauteur de la rampe (4) est réglable.

3. Procédé selon la revendication 1, caractérisé en ce que la rampe est déplaçable dans la direction du canal.

4. Procédé selon la revendication 1, caractérisé en ce que la face supérieure de la rampe (4) est plate et que l'inclinaison de la rampe est réglable.

5. Procédé selon la revendication 1, caractérisé en ce que la rampe (4) possède une longueur d'au moins 5 cm.

6. Dispositif pour produire en continu une couche monomoléculaire formée de molécules amphiphiles sur la surface d'un liquide polaire, contenant :
1. au moins un canal d'écoulement (9) servant à recevoir un liquide et comportant une partie possédant une section transversale (9b) relativement faible et qui possède une rampe (4) fixée sur le fond du canal, cette partie étant suivie, dans la direction d'écoulement, par une partie du canal possédant une section transversale relativement importante (9c) et qui est limitée, dans la direction d'écoulement, par un obstacle (7);
2. un dispositif pour produire l'écoulement du liquide et contenant
2.1 des moyens (2b,2c) pour retirer du liquide en circulation, à proximité de l'obstacle gênant l'écoulement; et
2.2 des moyens (2a) pour amener du liquide,
3. un dispositif (3) pour amener des molécules amphiphiles,
caractérisé en ce que la rampe (4) est disposée de manière à être mobile sur le fond du canal.

7. Procédé pour fabriquer un substrat pourvu d'un revêtement, selon lequel on forme sur un liquide polaire, une couche ultra-mince d'un composé amphiphile, on immerge un substrat (6) dans le liquide polaire, à travers cette pellicule et/ou on le ressort à travers cette pellicule, au moins une couche ultra-mince du composant amphiphile étant transférée sur le substrat (6), caractérisé en ce qu'on forme, selon le procédé de la revendication 1, une couche ultra-mince sur la surface d'un liquide polaire.

8. Procédé pour recouvrir, d'une manière successive dans le temps, un substrat rigide (6) avec des pellicules ultra-minces, disposées de façon régulière, d'un premier et d'un second composé amphiphile , selon lequel on forme, par étalement et compression au niveau de l'interface liquide polaire/air, dans une première chambre (1), une pellicule du premier composé amphiphile et, dans une seconde chambre (1'), une pellicule du second compose amphiphile, qu'on amène les phases du liquide polaire dans les deux chambres (1,1') à communiquer entre elles, les chambres étant séparées l'une de l'autre, au niveau de la surface, par au moins une paroi (10) possédant un sas (11), on introduit un substrat (6) dans la surface de la première chambre (1), le substrat étant recouvert par la pellicule du premier composé amphiphile, on introduit le substrat à l'état immergé, par au moins un sas (11), dans la seconde chambre (1'), et on le ressort en cet endroit, le substrat étant alors recouvert par une pellicule du second composé amphiphile, caractérisé en ce que la première chambre (1) et la seconde chambre (1') font partie du dispositif selon la revendication 6 et représentent respectivement des parties d'un canal ayant une section transversale relativement importante.

9. Procédé pour recouvrir, d'une manière successive dans le temps, un substrat rigide avec des pellicules ultra-minces, disposées de façon régulière,d'un premier et d'un second composé amphiphile , selon lequel on forme, par étalement et compression au niveau de l'interface liquide polaire/air, dans une première chambre (1), une pellicule du premier composé amphiphile et, dans une seconde chambre (1'), une pellicule du second composé amphiphile, on amène les phases du liquide polaire dans les deux chambres à communiquer entre elles, les chambres étant séparées l'une de l'autre, au niveau de la surface, par au moins une paroi (10) possédant un sas (11), on immerge un substrat (6) à l'extérieur de la première chambre (1), on l'introduit, à l'état immergé, dans la première chambre (1), en le faisant passer par au moins un sas de surface, on le ressort en cet endroit, le substrat étant alors recouvert par la pellicule du premier composé amphiphile, on immerge le substrat (6) dans la seconde chambre (1'), auquel cas le substrat est recouvert par la pellicule du second composé amphiphile, et on retire le substrat (6) à l'état immergé, hors de la seconde chambre (1'), par au moins un sas de surface, caractérisé en ce que la première chambre (1) et la seconde chambre (1') font partie du dispositif selon la revendication 6 et représentent respectivement des parties de canal possédant une section transversale relativement étendue.

10. Procédé pour recouvrir un substrat en forme de bande flexible (20) par des pellicules ultra-minces disposées de façon régulière, formées d'un premier et d'un second composé amphiphile , selon lequel on forme, par étalement et compression, au niveau de la surface limite liquide polaire/air, dans une première chambre (1), une pellicule du premier composé amphiphile et, dans une seconde chambre (1'), une pellicule du second composé amphiphile, on amène les phases du liquide polaire situé dans les deux chambres (1,1') à communiquer entre elles, les chambres (1,1') étant séparées l'une de l'autre, au niveau de la surface, par une paroi (18), on immerge le substrat flexible (1) dans la surface de la première chambre (1) et on le recouvre avec la pellicule formée du premier composé amphiphile, on introduit le substrat à l'état immergé, au-dessous de la paroi (18), dans la seconde chambre (1'), on le ressort en cet endroit et le substrat est alors recouvert par une pellicule du second composé amphiphile, caractérisé en ce que la première chambre (1) et la seconde chambre (1') font respectivement partie d'un dispositif selon la revendication 6 et représentent respectivement des parties de canal ayant une section transversale relativement importante.

11. Procédé selon la revendication 8, 9 ou 10, caractérisé en ce que les premier et second composés amphiphiles sont identiques.

12. Procédé selon la revendication 8 ou 9, caractérisé en ce que les deux canaux d'écoulement (9,9') sont parallèles.

13. Procédé selon la revendication 8 ou 9, caractérisé en ce que les deux canaux d'écoulement (9,9') sont disposés en série et que les directions d'écoulement du liquide polaire dans les deux canaux d'écoulement sont opposées.

14. Procédé selon la revendication 8 ou 9, caractérisé en ce que les deux chambres (1,1'), qui communiquent entre elles et possèdent une section transversale relativement étendue, sont séparées par une chambre, qui ne comporte aucune pellicule de surface.

15. Dispositif pour transférer une couche ultramince formée en continue et constituée par des molécules amphiphiles, depuis la surface d'un liquide polaire, à un substrat, contenant :
1. au moins un canal d'écoulement (9) servant à recevoir un liquide et comportant une partie possédant une section transversale (9b) relativement faible et qui possède une rampe (4) fixée sur le fond du canal, cette partie étant suivie, dans la direction d'écoulement, par une partie du canal possédant une section transversale relativement importante (9c) et qui est limitée dans la direction d'écoulement, par un obstacle (7);
2. un dispositif pour produire l'écoulement du liquide et contenant
2.1 des moyens (2b,2c) pour retirer du liquide en circulation, à proximité de l'obstacle gênant l'écoulement; et
2.2 des moyens (2a) pour amener du liquide,
3. un dispositif (3) pour amener des molécules amphiphiles sur la surface du liquide à proximité du point d'amenée du liquide, et
4. des moyens pour transférer la couche ultra-mince, formée de façon continue, sur un substrat (6) par immersion dans et/ou extraction à partir du liquide, recouvert par la couche ultra-mince, dans la partie (9c) du canal possédant la section transversale relativement étendue, caractérisé en ce que la rampe (4) est fixée, de manière à être mobile, sur le fond du canal.
